Europäisches Patentamt

European Patent Office

Office européen des brevets

(11) Publication number: **0 158 472**
**A2**

# EUROPEAN PATENT APPLICATION

(21) Application number: **85302077.4**

(22) Date of filing: **26.03.85**

(51) Int. Cl.⁴: **C 04 B 37/00**
**C 04 B 35/58, C 04 B 35/64**

(30) Priority: **28.03.84 JP 58123/84**

(43) Date of publication of application:
**16.10.85 Bulletin 85/42**

(84) Designated Contracting States:
**DE FR GB SE**

(71) Applicant: **Kabushiki Kaisha Toshiba**
**72, Horikawa-cho Saiwai-ku**
**Kawasaki-shi Kanagawa-ken 210(JP)**

(72) Inventor: **Komatsu, Michiyasu**
**c/o Patent Division 1-1 Shibaura 1-chome**
**Minato-ku Tokyo 105(JP)**

(74) Representative: **Freed, Arthur Woolf et al,**
**MARKS & CLERK 57-60 Lincoln's Inn Fields**
**London WC2A 3LS(GB)**

(54) **Method for production of sintered ceramic article.**

(57) A method for the production of a sintered ceramic article
is disclosed. This method comprises molding divided frag-
ments or components (1, 2) of different ceramic composi-
tions.

By this method, there is obtained a sintered ceramic ar-
ticle wherein a plurality of divided fragments or components
(1, 2) are formed of ceramic compositions selected to suit the
functions the fragments or components (1, 2) are expected
to fulfil. Union of the fragments or components (1, 2) is at-
tained with great strength.

FIG. I

1

Method for production of sintered ceramic article

This invention relates to a method for the production of a sintered ceramic article.

In recent years, the practice of using sintered ceramic articles in forming parts such as rotor members in turbochargers which are used at elevated temperatures has been in vogue.

These sintered ceramic articles are produced by mixing a powdered ceramic material such as silicon nitride with an organic binder such as wax, molding the resultant mixture in prescribed shapes, heating to degrease the shaped articles, and sintering the shaped articles.

By this method, however, one given shaped article can be molded only with one material of fixed composition. Thus, this method is not capable of producing a shaped article in which different parts are molded of materials of compositions severally selected to suit the functions the different parts are expected to fulfil.

When a method is developed which permits a part intended for use at elevated temperatures to be formed with a sintered ceramic article integrally combining portions possessing heat resistance and portions possessing thermal conductivity, it will offer great economic utility.

This invention has been perfected in due consideration of such state of prior art as described above and aims to provide a method for the production of a sintered ceramic article having different parts thereof made of materials of severally suitable compositions.

To be specific, in the production of a sintered ceramic article of a prescribed shape, the method of this invention is characterized by molding divided fragments of a prescribed part each possessed of matched engaging sections and using a varying ceramic composition and, in the subsequent step of sintering, integrally joining the divided fragments by coupling the matched engaging sections thereof.

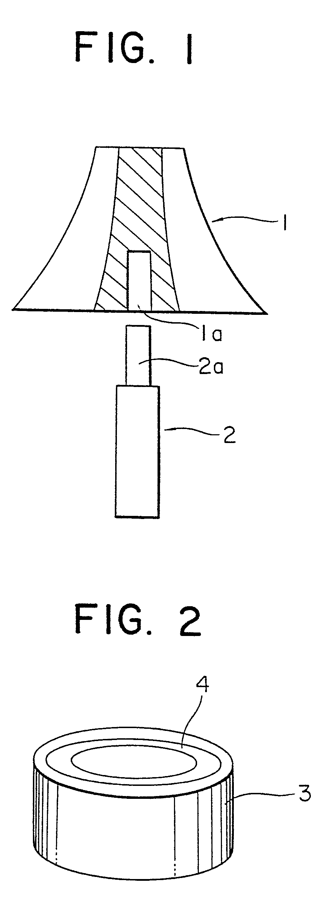

Fig. 1 is a cross section of a sintered ceramic article obtained by one embodiment of this invention. Fig. 2 is a perspective view of a sintered ceramic article obtained by another embodiment of this invention.

In this invention, for example, first a powdered ceramic material such as silicon nitride or alumina and 20 to 30% by weight of an organic binder such as wax, acrylic resin, polystyrene, or atactic polypropylene added thereto are mixed to prepare a composition. Then, the fragments of simplest possible shape into which a ceramic article desired to be produced is divided are obtained by injection molding the aforementioned composition.

3

These divided fragments are designed so that mutually matched engaging sections will be formed in the boundaries thereof along which the divided fragments are to be joined to complete the shaped article.

The engaging sections are desired to be shaped so that one of the opposed engaging sections of two adjacent fragments forms an encircling ridge embracing a depression or a bore and the other engaging section forms an inserting member admissible into the depression or the bore as respective engaging sections. For example, one of the opposed engaging sections may be in the shape of an encircling ridge embracing a circular depression and the other engaging section in the shape of a protuberance admissible into the encircling ridge as illustrated in Fig. 1. Otherwise, the encircling ridge and the inserting member may be both annular members of different diameters as illustrated in Fig. 2.

The ceramic compositions of the divided fragments are suitably selected so as to meet the particular properties which the fragments are expected to acquire. In the case of a turbocharger rotor, for example, it is desirable to select a ceramic composition capable of withstanding elevated temperatures and resisting centrifugal force for rotary blades and a ceramic composition excellent in heat conduction, mechanical strength, and workability for a shaft.

In accordance with this invention, the junction strength between two adjacent divided fragments can be enhanced by varying the organic binder contents in the two ceramic materials for the divided fragments so that the shrinkage occurring in the fragment incorporating the encircling ridge will be greater than that occurring in the fragmnt incorporating the inserting member. This is because the fragment containing the encircling ridge shrinks to a greater extent and, therefore, exerts a compressive stress upon the fragment containing the inserting member. The organic binder contents in the ceramic materials for the fragment falling inside and that falling outside are generally differentiated by 2 to 5% by weight.

The fragments of the shaped article so molded in a separated manner are subsequently degreased by the conventional method. This degreasing is carried out generally in a nitrogen gas atmosphere, with the temperature increased at a speed of 1 to 10 °C / hour up to about 700° C and then kept at this level for about two hours. The heating conditions may be varied as occasion demands. Thereafter, the fragments are joined by coupling the matched engaging sections to complete the shaped article. This shaped ceramic article is sintered.

The sintering carried out in a nitrogen gas atmosphere at 1700 to 1900°C when silicon nitride is used as the ceramic material. The sintering may be effectively performed at a lower temperature when alumina or other similar oxide is used as the ceramic material.

The sintering may be carried out either under normal atmospheric pressure or under gas pressure. Where the sintered ceramic article desired to be produced has a simple shape, the hot-press sintering method may be employed for the purpose of sintering.

Now, the present invention will be described more specifically below with reference to working examples. It should be noted, however, that this invention is not limited in any sense by these working examples.

Example 1:

A powdered ceramic material formed preponderantly of silicon nitride powder (consisting of 100 parts by weight of $Si_3N_4$, 5 parts by weight of $Y_2O_3$, 3 parts by weight of $Al_2O_3$, and 3 parts by weight of AlN) and wax addd thereto in an amount calculated to account for 28% by weight based on the ceramic material were mixed. A rotor blade 1 of a turbocharger possessing a depression 1a in the rotary shaft portion as shown in Fig. 1 was obtained by injection molding the resultant ceramic mixture.

Separately, a powdered ceramic material identical in composition with the aforementioned powdered ceramic material formed preponderantly of silicon nitride, except that 1.5 parts by weight of $TiO_2$ additionally incorporated therein, was mixed with wax added thereto in an amount calculated to account for 28% by weight based on the powdered ceramic material. A rotary shaft 2 possessing at one end thereof a protuberance 2a admissible into the aforementioned depression was formed by injection molding the resultant ceramic mixture. The two fragments so obtained were degreased in a nitrogen gas atmosphere with the temperature increased at a speed of 1 to 10°C/hour up to 700°C and maintanined at 700°C for two hours. The fragments were joined with the depression 1a and the protuberance 2a set to each other as illustrated in Fig. 1 and, in that state, sintered at 1750°C for 30 minutes.

The sintered ceramic article obtained consequently had little distortion and showed productivity of good yield.

Example 2:

A powdered ceramic material formed preponerantly of silicon nitride powder (consisting of 100 parts by weight of $Si_3N_4$, 7.5 parts by weight of $Y_2O_3$, 4 parts by weight of $Al_2O_3$, and 3 parts by weight of AlN) and wax added thereto in an amount calculated to account for 28% by weight based on the ceramic material were mixed.

An outer annular member 3a illustrated in Fig. 2 was formed by following the procedure of Example 1. It was then degreased under the same conditions as in Exampe 1.

Separately, a powdered ceramic material formed preponderantly of silicon nitride powder (consisting of 100 parts by weight of $Si_3N_4$, 5 parts by weight of $Y_2O_3$, 2 parts by weight of $Al_2O_3$, and 2 parts by weight of AlN) and wax added thereto in an amount calculated to account for 26% by weight based on the ceramic material were mixed.

An inner annular member 4 having a slightly smaller outside diameter than the aforementioned outer member was formed by injection molding and then degreased by the conventional method.

Then, the two fragments so produced were fitted to each other, then degreased under the same conditions as in Example 1, and sintered.

The two annular members were sintered under application of pressure to bring about the same effect as would be obtained by shrinkage fit. Consequently, they were joined with great strength because their opposed boundaries came into tight contact with each other.

Example 3:

A powdered ceramic material formed preponderantly of silicon nitride powder (consisting of 100 parts by weight of $Si_3 N_4$, 6 parts by weight of $Y_2 O_3$, 2 parts by weight of $Al_2 O_3$, and 5 parts by weight of 27R poly-type AlN) and water were mixed in a ball mill (using a pot of $Al_2 O_3$ and balls of $Al_2 O_3$) for 48 hours and subjected to grading, to afford a slurry mixture.

The aforementioned slurry was mixed with a sodium alginate type binder of an amount of 7% by weight based on the total amount of the powdered mixture and then molded by the slip casting method in the shape of an outer annular member 3a illustrated in Fig. 2.

Separately, a powdered ceramic materials (consisting of 100 parts by weight of $Si_3 N_4$, 4 parts by weight of $Y_2 O_3$, 1.5 parts by weight of $Al_2 O_3$, and 3 parts by weight of 27R poly-

type AlN) and water were mixed. Then, an inner annular member 4 having a slightly smaller outside diameter than the aforementioned outer member was formed by the slip casting method.

Then, the two fragments so produced were fitted to each other, then dried and degreased in a nitrogen atmosphere at a maximum temperature of 500°C and sintered at 1750°C for 2 hours. Consequently, they were jointed with great strength because their opposed boundaries came into tight contact with each other.

CLAIMS

(1)  A method for the production of a sintered ceramic article in a prescribed shape, comprising the steps of molding divided fragments of said shaped article each possessing a matched engaging section and using a varying ceramic composition and, in the subsequent step of sintering, joining said fragments integrally by coupling said matched engaging sections.

(2)  A method according to Claim 1, wherein one of the opposed engaging sections of two adjacent fragments forms an encircling ridge embracing a depression or a bore and the other engaging section forms an inserting member admissible into said depression or bore.

(3)  A method according to Claim 1 or Claim 2, wherein a powdered ceramic and an organic binder are incorporated in said fragments in varies propotions such that the shrinkage of the fragment containing said encircling ridge is greater than that the shrinkage of the fragment containing said inserting member.

(4)  A method according to Claim 1, wherein said sintered ceramic article is a rotor in a turbocharger.

# FIG. 1

1

1a

2a

2

# FIG. 2

4

3